# EUROPEAN PATENT APPLICATION

(11) **EP 4 763 790 A1**
(43) Date of publication of application: **24.06.2026**
(21) Application number: 25219759.5
(22) Date of filing: 01.12.2025
(51) Int. Cl.: B66F 9/065, B25J 9/16, B66F 9/22

(54) **SELF-PROPELLED OPERATING MACHINE WITH ADAPTIVE CONTROL SYSTEM**

(30) Priority: 19.12.2024 IT 202400029190
(71) Applicant: Manitou Italia S.r.l., 41013 Castelfranco Emilia (Modena) (IT)
(72) Inventor: IOTTI, Marco, 42123 REGGIO EMILIA (IT)
(74) Representative: Gagliardelli, Fabrizio

(57) **Abstract**

Described is an operating machine (1) comprising: one or more mobile apparatuses, each operable by one or more respective actuators; a control element (2) operable by an operator; a control unit (3) configured to control the actuators based on the operation of the control element (2), one or more operating sensors to detect one or more operating parameters based on operating conditions of the machine (1). The control unit (3) is configured to control the actuators on the basis of operating relations between an input signal (I) received from the control unit (3) following the actuation of the control element (2) and a speed of an actuated apparatus, which are variable as a function of the operating parameters detected by the sensors.

## Description

This invention relates to a self-propelled operating machine.

In detail, the invention relates to an operating machine, such as a telescopic lift (or "telehandler") or, for example, an aerial work platform.

Prior art telehandlers are known, consisting of a vehicle provided with a frame or "undercarriage" that is movable on wheels, which comprises a rotary platform which in turn comprises the driver's cab and a movement boom which can be extended telescopically. Alternatively, the telehandler may be free of a rotary platform and the cab and boom are provided directly on the frame.

At the distal end of the boom there is an attachment for lifting or moving loads, such as, for example, a fork, a cage, a side-shifter, a winch, etc.

By means of controls included in the cab, such as, for example, joysticks or pushbuttons, the operator can operate the various mobile attachments of the machine, such as the boom, the equipment, the platform and the outriggers.

In more detail, the controls are electrically connected to the control unit of the machine that drives an electro-hydraulic distributor that actuates the actuators that impart the movements to the mobile attachments, such as the cylinders of the boom or the slewing ring of the platform.

Currently, the control of the movements of the mobile attachments is obtained by mapping the control unit so as to associate the position of each control element, such as, for example, the above-mentioned joystick, with the position of the spool of a valve of the hydraulic distributor, the degree of opening of which determines the speed of the movement of the operated attachment.

This solution does not take into account disturbances that may affect the movement of the attachments, such as the pressure and flow rate of the working fluid, errors in the position of the valve, but also alternating factors such as the external temperature or the weight of the load.

As a result, the operator experiences a more or less serious disconnection between the speed of movement of the attachments that the operator requires and the actual speed.

An attempt has been made to overcome this problem by means of electronic control systems that, in practice, have been found to be only partially adaptive with respect to the various operating conditions of the machine, which, the other hand, constitutes a requirement expressed by the market. The technical purpose which forms the basis of the invention is to provide a self-propelled operating machine which overcomes the limits of the prior art. The specified technical task is achieved by an operating machine made according to one or more of the accompanying claims.

Further features and advantages of the present invention are more apparent in the non-limiting description of a preferred embodiment of the proposed telehandler, as illustrated in the accompanying drawings, in which:

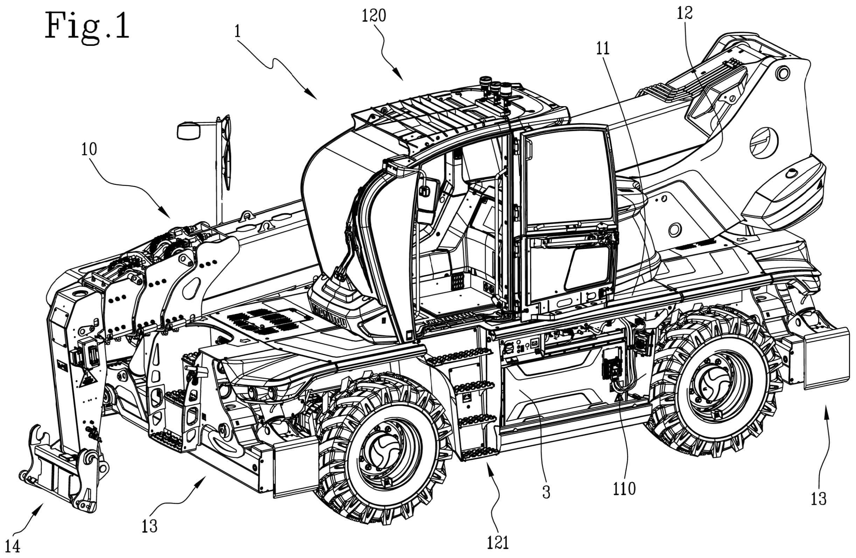

- Figure 1 is a perspective side view of a machine according to the invention, in an operating condition in which it carries a battery on board;
- Figure 2 is a diagram of a drive system of the mobile attachments of the machine; and
- Figure 3 is a diagram of the automatic control of the movement of the mobile attachments of the machine.

With reference to the accompanying drawings, reference numeral '1' denotes in its entirety a self-propelled operating machine made according to the invention.

The proposed machine 1 may consist of or comprise a telescopic handler or aerial work platform or similar work vehicles.

The machine 1 shown in the drawings is a telescopic handler 1 (or telehandler) of the so-called "rotating" type, provided with a undercarriage 11, movable on wheels, on which is fixed a rotary platform 12 which houses the driver's cab 120 and to which is hinged a telescopic operating boom 10. The platform can be moved by a hydraulically operated rack or other actuator having the same function.

The boom 10 is provided, at its distal end, with a removable loading attachment (not shown). The term apparatus means both a device for engaging a load, such as a fork, a boom equipped with hooks, a winch, a gripper, etc. and a device for lifting persons and, if necessary, also a load, such as a load cage.

So one of the characteristics of this type of machine, unlike aerial work platforms, is the possibility of changing the apparatus depending on the use. Some of these apparatuses have mobile parts, for example the forks can have mobile prongs, the winches have a motor, often of the hydraulic type, to recover the cable, some booms have extendable hooks, there are grippers that, in addition to tightening the jaws, are able to swing frontally or rotate about themselves.

Still more in detail, the boom 10 may have, at its distal end, an attachment device 14, also of the type normally in use in the machines manufactured by the Applicant, which allows the replacement of the attachment and the connection thereof to the hydraulic and electronic apparatuses of the machine 1.

Optionally, the undercarriage 11 can also be provided with outriggers 13 comprising a plurality of stabilizing booms; for example, the machine 1 can be provided with so-called "scissor" outriggers that include two pairs of booms which are able to rotate with respect to the frame 11 and to extend telescopically. The outriggers 13 can be operated between the extended resting position and the retracted rest position by relative hydraulic cylinders or by other actuators.

According to certain embodiments, in place of the wheels there may be tracks or other similar means.

The boom 10 is articulated so as to oscillate vertically, under the actuation of at least one hydraulic cylinder or other actuator, between a lower position, substantially horizontal, and an upper position wherein the boom 10 is close to the vertical. The boom 10 is extensible and retractable and, more precisely, comprises a plurality of segments inserted one in the other, coaxial with one another and designed to translate along the axial direction. The elongation and retraction of the boom 10 are also produced by one or more hydraulic cylinders, or other actuators, or also by a telescopic cylinder (or another actuator with several stages).

The machine 1 may also comprise an electro-hydraulic distributor 15 to which are individually connected the hydraulic actuators used in the machine 1. The distributor is preferably powered by a pump driven by a motor/engine. However, embodiments of the invention in which one or more of the above-mentioned actuators are of the electric type instead of hydraulic are not excluded.

It is also not excluded that the invention can be used with a different type of operating machine.

In particular, the proposed machine 1 could also be a "fixed" type telescopic handler, that is to say, without the rotating platform, wherein the cab and the boom are mounted directly on the frame/chassis which rests on the ground by means of the wheels.

The propulsion can be achieved by a thermal engine, which drives both the transmission and the pump and is placed inside the frame or "undercarriage" 11, or by one or more electric motors, for example an electric motor to drive the transmission and one that drives the pump, which could be placed in the undercarriage.

The machine 1 includes a control unit 3 which is designed to transmit control signals to the distributor which consequently commands the actuators, in such a way that they operate the boom 10, the outriggers 13, the platform 12, the motor(s)/engine, the accessory and other apparatuses of the machine 1, according to the commands issued by the operator who sits in the cab 120. Optionally, it may be possible to use the same control element 2 to operate various mobile apparatuses, upon selection by the operator.

In practice, the machine 1 includes in the relative cab 120, available to the operator, control elements 2 such as joystick, pedals, pushbuttons, touchscreens etc; when the operator acts on the commands, the control unit 3 generates control signals which are received by the distributor 15, which then adjusts consequently the operation of each actuator of the boom 10, the outriggers 13, the accessory etc.

In more general terms, the invention includes a control unit 3 configured to control the movement actuators of the mobile apparatuses 10, 12, 13 of the machine 1 based on the operation of the respective control element 2.

More generally, the machine is provided with at least one control station which in a particular case is the cab itself. To be precise, the control elements can be included in a remote-control unit that can be used in addition to or as an alternative to the cab or additional control stations.

As already mentioned above, by way of example, but without limiting the scope of the invention, the mobile apparatuses are one or more of the following: operating boom 10, rotating platform 12, attachment mounted on the operating boom and outriggers 13.

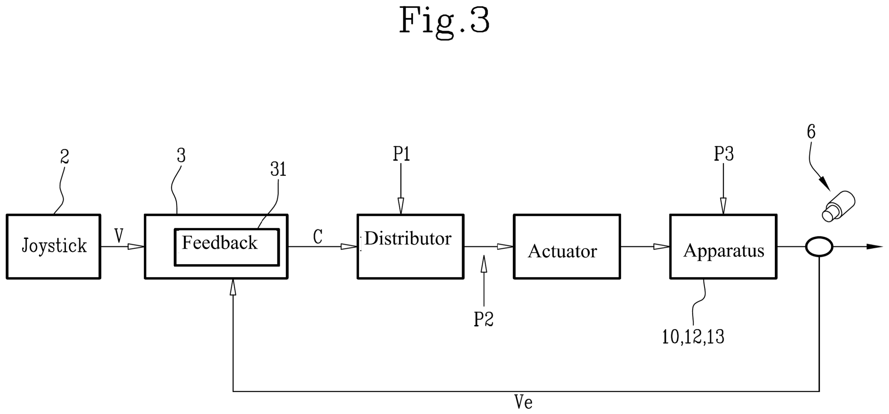

In a preferred, but non-limiting embodiment, the invention combines a negative feedback on the control of the speed of the apparatuses 10, 12, 13, having as input a relationship or "setpoint" between the speed controlled and the degree of operation of the respective control elements, with a dynamic adaptation of the same "setpoint" to the different working conditions of the machine 1 (see figure 3).

In practice, the invention allows automatic adaptation of the speed of response of the mobile apparatuses to the operator's requests both to random disturbances and to the variation of the operating conditions in which the machine 1 is to operate, satisfying the market need mentioned in the introduction. This will become clearer in the following description, where example embodiments will be illustrated of the proposed machine 1 as well as their possible practical applications.

According to an important feature of the invention, the machine 1 comprises one or more operating sensors for detecting one or more operating parameters as a function of operating conditions of the machine 1.

Preferably, the operating parameters include internal operating parameters that are a function of internal operating conditions of the machine 1. In detail, the internal parameters can be one or more of the following: motor/engine revolutions, simultaneous operation of several apparatuses, or devices included in the same apparatus, pressure of the working fluid, temperature of the working fluid.

Furthermore, preferably, the above-mentioned operating parameters comprise external operating parameters that are a function of conditions of use of the machine 1. These external parameters can be one or more of the following: weight of an attachment mounted on the operating boom of the machine 1, type of attachment, weight of the load carried by the attachment, ambient temperature, degree of humidity.

More in detail, the variation of the revolutions of the motor/engine can change the dynamics of the movements with the same command, that is, even if the operation of the control element by the operator is the same. In fact, if the revolutions of the motor/engine change, the flow of the working fluid changes and this affects the reactivity of the functioning the apparatuses operated by hydraulic actuators with the same command.

Motor revolutions can be detected by sensors such as optical encoders or capacitive sensors.

Even variations in pressure and temperature of the working fluid can change the dynamics of the movements in the apparatuses driven by hydraulic actuators, due to a change in the inertia of the fluid itself. An example of these effects is the head loss.

Sensors to detect these parameters are pressure switches or thermoelectric sensors such as thermocouples.

Variations in the weight of the attachment and the load carried can lead to variations in inertia, different energy absorption and variation in the mechanical resistance of the apparatuses.

For the measurement of these parameters, pressure switches can be used, for example, in the hydraulic circuit of the machine, for example inside the hydraulic jacks or strain gauge sensors.

A different type of attachment may require different sensitivity and responsiveness of the movement of the apparatus with respect to the operation of the control element. For example, in the case of positioning materials by means of a fork or similar attachment, one might want to prioritize the tracking precision between command and movement, and therefore apply a very reactive control, in the case of using cages for lifting people, one might want to prioritize the fluidity of movement, achieving a more dampened control.

Optical sensors that read QR codes or RFID devices or other recognition sensors can be used to recognize the type of apparatus.

A variation in the environment temperature, for example, can have an impact on the friction of the joints and more precisely on the variation of the friction coefficient of the lubricants.

As mentioned, the control unit 3 is configured to control the actuators on the basis of operating relations, or "setpoints" or "maps", between an input signal I received from the control unit 3, following the actuation of the control element 2 and the speed of movement of an actuated apparatus. Advantageously, the control unit 3 is configured to vary these operating relations as a function of the operating parameters detected by the sensors. In practice, as already mentioned, the apparatuses according to the invention, for example the operating boom 10, are moved in accordance with the operation of a respective control element 2, for example a joystick, on the basis of a respective relation that associates the speed of movement of the apparatus that is operated with a degree of operation of the control element 2, for example its relative position.

In the case of the joystick 2, the input signal I can be proportional to the relative position, that is, to the distance between its instantaneous position and the neutral non-operating position.

The control unit 3 according to the invention is configured to automatically vary the operating relation in an adaptive manner with the varying of the operating conditions.

In detail, for each control element 2, joystick or button or on-screen index, and for each apparatus 10, 12, 13 that moves in response to the actuation of that control element 2, a respective operating relation (or "setpoint") can be defined, which preferably is a mathematical relation, such as for example a function.

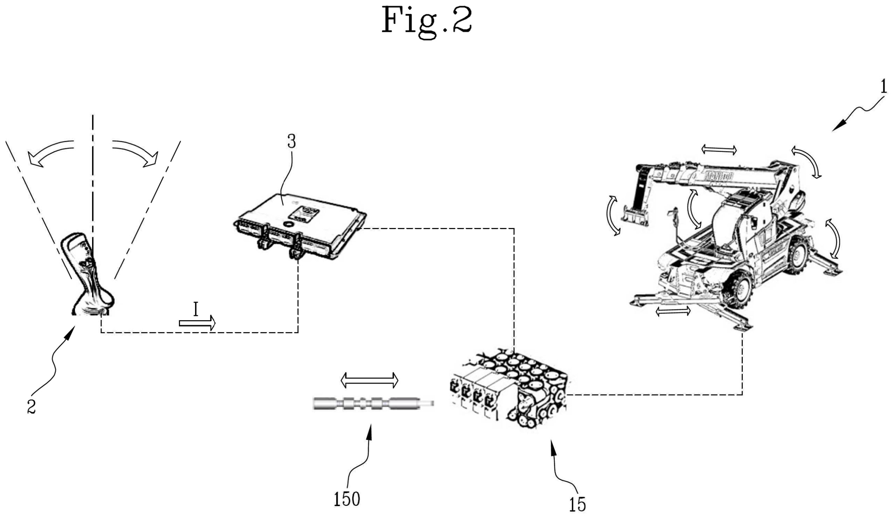

In a version of the invention wherein the actuators that actuate the movement of the apparatuses are hydraulic, the speed of movement of each actuator is determined by the relative position of the spool 150 of the respective actuation valve of the distributor 15, that is, by the degree of opening of the valve (see the diagram in Figure 2).

In this case, the position of the spool 150 is controlled by the control unit 3 in accordance with the respective operating relation. In practice, the control unit 3 comprises recorded in a memory module thereof a mapping of the positions of the spool 150 associated with the positions of the joystick, or more generally with the degree of operation of the control element 2.

The various maps that associate the degree of operation of the control element 2 with the speed with which the controlled apparatus moves vary with the variation of the measurements made by the above-mentioned sensors, that is, with the variation of the operating conditions.

For example, it may be envisaged that a memory module of the processing unit comprises a predetermined operating relation for each of the mobile apparatuses.

In a possible version of the invention, the predetermined operating relation may be a reference operating relation which is varied according to the value of the detected operating parameters. In detail, it can be provided that the variation of the relation is triggered by the fact that the value of the parameters detected exceeds predetermined thresholds or exits or enters into predetermined value ranges or that it is instantly modified continuously and not discretely based on the instantaneous values of the detected operating parameters.

Furthermore, it can be provided that not a single reference relation is recorded in the memory module but a plurality of them for each apparatus or that, on the other hand, the operating relation is always determined retrospectively based on the operating parameters detected.

The variation of the operating relation associated with an apparatus 10, 12, 13 can be the switching from one predefined operating relation to another predefined operating relation (recorded in the memory module), depending on the value of the detected operating parameters or a modification of the above-mentioned reference relation through a mathematical transformation. Thus, in general terms, in the case where the operating relation between a control element 2 and an apparatus is represented by one or more mathematical functions, the control unit 3 may comprise a variation module configured to apply to the relation a mathematical transformation that depends on the detected parameters. The transformation can in turn be a predefined function, in which one or more variables or geometric parameters change as the operating parameters detected by the sensors vary.

For example, if the operating relation can be represented in a Cartesian plane as a curve, with the variation of the operating parameters, for example of an external parameter such as the atmospheric temperature, the curve will vary, for example, in terms of position, slope, curvature or other geometric parameters.

In a possible embodiment, the measured operating parameters may influence or modify the internal control parameters that describe a controller such as, for example, a PID (that is, a Proportional Integrative Derivative controller) or other type of control device or algorithm.

According to a version of the invention, partly mentioned above and schematically illustrated in Figure 3, the machine 1 comprises one or more checking sensors 6 suitable for detecting the actual speed of the apparatus controlled by the control unit 3.

In this version, the control unit 3 performs a closed-loop control of the movement of the apparatus actuated, by receiving as input both a target speed signal V of the apparatus determined by the applied setpoint, and an actual speed signal Ve emitted by the checking sensor(s) 6.

Preferably, the control unit 3 performs a negative feedback control wherein the target speed determined by the operating relation is compared with the actual speed.

More in detail, the control unit 3 may include a feedback module 31 that produces a command signal C, designed to command the actuator or actuators so as to move the apparatus actuated with a speed that depends on the target speed established by the operating relation and by the difference between the target speed and the actual speed.

In the case that the actuators are hydraulic, the command signal C is transmitted to the distributor 15 which feeds the actuators accordingly (see Figure 3).

Thanks to these measures, the machine 1 can compensate for internal disturbances P1, P2 such as pressure drops in the hydraulic circuits, for example between the distributor 15 and the actuators or dead zones of the spool 150 or tolerances, for example of the spool 150 itself or the rigidity of the pipes or external disturbances P3 such as: variations in the mechanical resistances of the mobile apparatuses, such as the reaction forces of the slides or variations in the rigidity of the moving parts and so on.

Examples of checking sensors are: linear position sensors, speed or acceleration sensors, angular position sensors, inertial sensors such as accelerometers, sensors that measure resistance variations, magnetic sensors, inductive or magnetostrictive sensors. In case electric actuators are used, the checking sensors can be internal to the actuators themselves.

It should be noted that, in the present description, the control unit 3 is presented as being subdivided into separate functional modules solely for the purpose of describing the functions clearly and completely.

In practice, the control unit 3 may consist of a single electronic device, also of the type commonly present on this type of machine (such as, for example, an engine control unit), suitably programmed to perform the functions described; the various modules can correspond to hardware units and/or software routines forming part of the programmed device.

Alternatively, or in addition, the functions can be performed by a plurality of electronic devices on which the above-mentioned functional modules can be distributed.

Generally speaking, the processing unit 3 may have one or more microprocessors or microcontrollers for execution of the instructions contained in the memory modules and the above-mentioned functional modules may also be distributed on a plurality of local or remote calculators based on the architecture of the network in which they reside.

The invention is also configured as a method for controlling one or more mobile apparatuses of a self-propelled operating machine, preferably configured like the one described above.

A method comprising the following steps:
- controlling the apparatuses on the basis of defined operating relationships between an actuation of one or more control elements and the speed of the controlled apparatus or apparatuses;
- measuring one or more operating parameters as a function of the operating conditions of the machine; and
- varying the operating relations based on the parameters measured.

Preferably, the method also comprises:
- measuring the actual speed of the apparatus or apparatuses operated;
- controlling in a closed loop the movement of the apparatus or apparatuses operated on the basis of the target speed of the apparatus determined by the respective operating relation and on the basis of the actual speed.

Optionally, the method includes operating steps corresponding to respective functions performed by the components, devices or apparatuses of the machine 1 of the invention, with particular but not exclusive reference to the control unit 3 or to the sensors.

## Claims

1. An operating machine (1) comprising: one or more mobile apparatuses, each of which can be operated by one or more respective actuators; at least one control element (2) which can be operated by an operator; at least one control unit (3) configured for controlling the actuators based on the operation of the control element (2), one or more operating sensors for measuring one or more operating parameters as a function of operating conditions of the machine (1), wherein the control unit (3) is configured for controlling the actuators on the basis of operating relations between an input signal (I) received by the control unit (3) upon the operation of the control element (2) and a speed of an operated apparatus, which operating relations are variable as a function of the operating parameters measured by the sensors.

2. The machine (1) according to the preceding claim, wherein the mobile apparatuses are one or more of the following: operating boom (10), rotating platform (12) mounted on an undercarriage (11) movable on wheels, attachment mounted on the operating boom (10), outriggers (13).

3. The machine (1) according to any one of the preceding claims, wherein the machine (1) comprises one or more checking sensors (6) designed to measure the speed of the apparatus operated and wherein the control unit (3) performs a closed loop control of the movement of the apparatus operated, receiving as input both the target speed of the apparatus determined by the respective operating relationship and the actual speed of the apparatus.

4. The machine (1) according to any one of the preceding claims, wherein one or more actuators are of the hydraulic type and are controlled by an electro-hydraulic distributor (15), of which the machine (1) is equipped, wherein the speed of movement of each actuator is determined by a position of a spool (150) of a valve of the distributor (15), wherein the position of the spool (150) is controlled by the control unit (3) according to said operating relations.

5. The machine (1) according to any one of the preceding claims, wherein the operating parameters comprise internal parameters which are a function of internal operating conditions of the machine (1).

6. The machine (1) according to the preceding claim, wherein the internal parameters are one or more of the following: motor/engine revolutions, simultaneous operation of several apparatuses or devices included in an apparatus, pressure of the operating fluid, temperature of the operating fluid.

7. The machine (1) according to any one of the preceding claims, wherein the operating parameters comprise external parameters which are a function of conditions of use of the machine (1).

8. The machine (1) according to the preceding claim, wherein the external parameters are one or more of the following: weight of an attachment mounted on an operating boom of the machine (1), type of attachment, weight of the load carried by the attachment, outside environmental temperature.

9. A method for controlling one or more mobile apparatuses of a self-propelled operating machine, comprising the following steps:
controlling the apparatuses on the basis of operating relationships between an actuation of one or more control elements and the speed of the controlled apparatus or apparatuses;
measuring one or more operating parameters as a function of operating conditions of the machine; and
varying the operating relations based on the parameters measured.

10. The method according to the preceding claim, comprising the following steps:
measuring the actual speed of the apparatus or apparatuses operated; and
controlling in a closed loop the movement of the apparatus or apparatuses operated on the basis of the target speed of the apparatus determined by the respective operating relationship and on the basis of the actual speed.
